(19) **Europäisches Patentamt / European Patent Office / Office européen des brevets**

(11) **EP 4 297 485 B1**

(12) **FASCICULE DE BREVET EUROPEEN**

(45) Date de publication et mention de la délivrance du brevet:
**29.07.2026   Bulletin 2026/31**

(21) Numéro de dépôt: **23178540.3**

(22) Date de dépôt: **09.06.2023**

(51) Classification Internationale des Brevets (IPC):
***H04W 36/24*** *(2009.01)*

(52) Classification Coopérative des Brevets (CPC):
**H04W 36/322;** H04W 36/08; H04W 84/12

(54) **PROCÉDÉ ET DISPOSITIF DE BASCULEMENT D'UNE CONNEXION WI-FI**

VERFAHREN UND VORRICHTUNG ZUM UMSCHALTEN EINER WI-FI-VERBINDUNG

METHOD AND DEVICE FOR SWITCHING WI-FI CONNECTION

(84) Etats contractants désignés:
AL AT BE BG CH CY CZ DE DK EE ES FI FR GB GR HR HU IE IS IT LI LT LU LV MC ME MK MT NL NO PL PT RO RS SE SI SK SM TR

(30) Priorité: **21.06.2022   FR 2206068**

(43) Date de publication de la demande:
**27.12.2023   Bulletin 2023/52**

(73) Titulaire: **Orange**
**92130 Issy-les-Moulineaux (FR)**

(72) Inventeurs:
• **BONNAMY, Jean-Michel**
**92326 CHATILLON (FR)**
• **RABIN, Olivier**
**92326 Chatillon (FR)**

(56) Documents cités:
**CN-A- 106 792 954      US-A1- 2010 069 070**
**US-A1- 2020 288 362**

• **FADEL ADIB ET AL.: "Multi-Person Localization via RF Body Re-flections", NSDI'15: PROCEEDINGS OF THE 12TH USENIX CONF�RENCE ON NETWORKED SYSTEMS DESIGN AND IMPLEMENTATION, May 2015 (2015-05-01), XP002808736**

## Description

### 1. Domaine de l'invention

L'invention se situe dans le domaine des réseaux dits Wi-Fi (normes IEEE 802.11, Institute of Electrical and Electronics Engineers, ou, en français, Institut des ingénieurs électriciens et électroniciens), et plus particulièrement celui du guidage du basculement d'une station (STA) entre plusieurs points d'accès (AP).

### 2. Etat de la technique antérieure

Dans un lieu équipé d'un même réseau local domestique (ou LAN en anglais) il est fréquent d'y trouver plusieurs points d'accès Wi-Fi (AP) afin d'améliorer la couverture radio pour les stations (STA) clientes se déplaçant dans le lieu.

Lorsque ces AP sont gérés en commun, ce qui est le cas par exemple d'un ensemble de points d'accès virtuels (LVAP) partageant le même identifiant BSS, il existe un mécanisme, appelé "Wi-Fi steering", permettant de forcer une STA mobile à se connecter sur le "meilleur" d'entre les AP en fonction de sa proximité. Pour déterminer quel est l'AP le plus approprié pour une STA il est indispensable d'estimer cette proximité par rapport aux différents AP. A cette fin le niveau de puissance du signal émis par la STA et reçu par l'AP, appelé RSSI, est utilisé pour estimer la distance entre STA et AP. Cette méthode n'est pas très précise et peut entrainer des erreurs de décision de basculement.

La demande de brevet US2010/069070(A1) décrit un système de radiocommunications mobiles, dans lequel une sélection de points d'accès est basée sur l'emplacement, le transfert étant déclenché lorsqu'une distance à un point d'accès dépasse un certain seuil. La demande de brevet CN106792954(A) divulgue une station Bluetooth/Wi-Fi, un module de détection d'environnement pour acquérir des paramètres environnementaux du dispositif Bluetooth, pour prédire le débit de transmission et pour transmettre les paramètres et le débit à un module de décision de commutation, le module de décision choisissant entre un appareil Bluetooth et un appareil Wi-Fi pour transmettre des données.

Un des buts de l'invention est de remédier à des inconvénients de l'état de la technique.

### 3. Exposé de l'invention

La présente invention est définie par les revendications annexées. Les modes de réalisation, aspects, exemples et clauses de mise en œuvre suivants sont fournis dans cette section afin de mieux comprendre l'invention, qui est exclusivement définie par les revendications annexées. L'invention vient améliorer la situation à l'aide d'un procédé de basculement d'une connexion d'une station Wi-Fi mobile, d'un premier point d'accès d'une pluralité de points d'accès Wi-Fi, vers un deuxième point d'accès de la pluralité, le procédé comprenant :

- un établissement d'un lien logique entre la station et un transporteur de la station, sur la base d'une comparaison entre une première position du transporteur et au moins une valeur relative à un signal émis par la station ;
- une décision de basculement sur la base d'une deuxième position du transporteur,

la première position et la deuxième position du transporteur étant déterminées par au moins un point d'accès de la pluralité, sur la base d'un signal réfléchi par le transporteur, dit signal Wi-Fi radar.

Selon la technique antérieure appelée Wi-Fi steering, le basculement d'une station en situation de mobilité entre plusieurs points d'accès d'un même BSS, par exemple des points d'accès virtuels hébergés par plusieurs points d'accès physiques sous un même contrôleur, est décidé sur la base des valeurs de paramètres, tels que par exemple le paramètre RSSI, que le point d'accès mesure sur un signal émis par la station. La valeur de RSSI représente la force du signal reçu par un équipement de la part d'un autre, et peut être assimilée à l'estimation d'une distance entre les deux équipements.

Selon l'invention, un lien logique est établi entre la station et son transporteur, par exemple entre un smartphone et la personne qui l'utilise, et la position du transporteur peut ainsi déclencher ou contribuer à déclencher le basculement de la station d'un point d'accès à un autre. Ceci présente entre autres l'avantage d'une plus grande précision, comparé à la valeur de paramètres déterminés ou mesurés par le point d'accès selon la technique antérieure, tels que le RSSI.

Le procédé peut être mis en œuvre par un contrôleur de la pluralité de points d'accès, ou par un des points d'accès de la pluralité.

La position du transporteur est déterminée par une technique analogue au radar et est plus précise qu'une valeur de RSSI, ce qui améliore le processus de basculement de la station.

Le corps d'une personne physique est d'un encombrement suffisant pour réfléchir des ondes radio émises par un point d'accès Wi-Fi. Ce point d'accès peut donc recevoir une partie des ondes réfléchies, la mesurer, et calculer la position du corps, à la manière d'un radar mono-statique (points d'émission et de réception confondus en un seul). Cette technique de géolocalisation est appelée "Wi-Fi sensing" dans la suite du document.

Selon un aspect du procédé, les signaux Wi-Fi radar sont des signaux de balise.

Grâce à cet aspect, la position du transporteur de la station peut être calculée par Wi-Fi sensing à une fréquence égale à celle de l'émission d'un signal de balise Wi-Fi (beacons en anglais), par exemple toutes les 100ms. D'autres types de trames émises par le point d'accès peuvent également être utilisées comme signaux Wi-Fi radar, mais les trames de balises présentent l'avantage de la régularité de la fréquence d'émission, ce qui augmente la fiabilité et la précision de la géolocalisation.

De plus, en réutilisant les signaux de balises existants, il n'y a aucune nécessité de créer un signal Wi-Fi spécifique pour le Wi-Fi sensing, et le fonctionnement de l'AP en mode émission n'est pas impacté.

Selon un aspect du procédé, l'au moins une valeur relative à un signal émis par la station est traduite en une distance de la station par rapport à un point d'accès ayant émis le signal reçu par la station, selon une grille de correspondance prédéterminée.

Ainsi il est aisé de déterminer s'il est possible que la station soit au même endroit que le transporteur. En effet, si la position du transporteur est à une distance du point d'accès qui est égale ou proche de la distance, donnée par la grille de correspondance, entre la station et le point d'accès, il y a de grandes chances que le transporteur et la station soient au même endroit.

Selon un aspect, le procédé comprend au moins une mise à jour du lien logique après l'établissement, sur la base d'une comparaison entre une nouvelle position du transporteur et au moins une nouvelle valeur relative à un signal émis par la station.

Il est important que la station soit mise en correspondance avec son transporteur, et non avec le corps d'une autre personne ne transportant pas la station. Grâce à cet aspect, le transporteur de la station n'est pas confondu avec un autre corps réfléchissant les signaux Wi-Fi radar.

Cette vérification, qui peut être récurrente après l'établissement du lien logique, permet de vérifier que la station est toujours transportée par le transporteur. Si ce n'est plus le cas, cela signifie en général que le transporteur s'est délesté de la station qui devient alors immobile.

Si la station n'est pas immobile mais que la position déterminée par les signaux Wi-Fi radar et le signal émis par la station ne correspondent plus, il est possible de recommencer l'étape d'établissement de mise en correspondance avec un autre corps en mouvement détecté à l'aide des signaux Wi-Fi radar, ou de recourir à une autre méthode de surveillance pour décider d'un éventuel basculement, par exemple par la méthode Wi-Fi steering.

Selon un aspect, le procédé comprend une mémorisation du lien logique avant la mise à jour.

Grâce à cet aspect, la valeur antérieure d'un lien logique peuvent être utilisée pour départager plusieurs nouvelles valeurs possibles lorsque le transporteur s'est éloigné de la station, puis s'en est rapproché, par exemple lorsqu'une personne dépose son smartphone sur une table, s'en éloigne, puis revient plus tard pour reprendre le smartphone. Il peut en effet y avoir plusieurs valeurs possibles pour la mise à jour du lien logique lorsque plusieurs transporteurs et plusieurs stations se trouve dans la zone couverte par la pluralité de points d'accès Wi-Fi.

Selon un aspect du procédé, le lien logique est établi à l'aide d'au moins deux valeurs relatives à un signal émis par la station, mesurées par au moins deux points d'accès de la pluralité.

Grâce à cet aspect, l'établissement du lien logique est facilité. En effet, la puissance d'un signal émis par la station permet, à un point d'accès la mesurant, d'estimer le rayon d'un cercle autour du point d'accès, sur lequel se trouve la station. Avec les estimations de 2 points d'accès distincts, l'intersection des 2 cercles de distance autour de chacun d'eux permet d'estimer par triangulation une position de la station, et non plus une distance. Il est plus précis de comparer cette position de la station avec la position du transporteur déterminée à l'aide du signal Wi-Fi radar.

Selon un aspect du procédé, l'au moins une valeur relative à un signal émis par la station est la valeur d'un paramètre RSSI.

Grâce à cet aspect, c'est un paramètre déjà utilisé pour le Wi-Fi steering qui est utilisé pour établir et surveiller la correspondance entre station et transporteur. D'autres paramètres peuvent également être utilisés, comme le SNR (signal to noise ratio, ou rapport signal à bruit).

Selon un aspect du procédé, la décision de basculement est effectuée en outre sur la base d'une valeur d'un paramètre RSSI.

Grâce à cet aspect, la décision de basculement dépend à la fois d'un critère de position géographique du transporteur de la station, calculée par la technique du Wi-Fi sensing à l'aide des signaux Wi-Fi radar, et d'un critère utilisé par le Wi-Fi steering. Ainsi, la correspondance entre la station et son transporteur est vérifiée jusqu'au moment du basculement, et une priorité à l'un des deux critères peut être donnée en cas de désaccord.

Selon un aspect du procédé, l'établissement du lien logique est réalisé sur la base de plusieurs valeurs relatives à un signal émis par la station, reçu respectivement par plusieurs points d'accès.

Grâce à cet aspect, la distance entre la station et plusieurs points d'accès peut être calculée. De plus, par triangulation, une position de la station peut être calculée, et la fiabilité de la comparaison avec la position du transporteur est augmentée.

Les différents aspects du procédé de basculement qui viennent d'être décrits peuvent être mis en œuvre indépendamment les uns des autres ou en combinaison les uns avec les autres.

L'invention concerne aussi un dispositif de basculement d'une connexion d'une station Wi-Fi mobile, d'un premier point d'accès d'une pluralité de points d'accès Wi-Fi, vers un deuxième point d'accès de la pluralité, le dispositif comprenant un récepteur, un émetteur, un processeur et une mémoire couplée au processeur avec des instructions destinées à être exécutées par le processeur pour :

- établir un lien logique entre la station et un transporteur de la station, sur la base d'une comparaison entre une première position du transporteur et au moins une valeur relative à un signal émis par la station ;
- décider un basculement sur la base d'une deuxième position du transporteur,

la première position et la deuxième position du transporteur étant déterminées par au moins un point d'accès de la pluralité de points d'accès Wi-Fi, sur la base d'un signal réfléchi par le transporteur, dit signal Wi-Fi radar.

Ce dispositif est apte à mettre en œuvre dans tous ses modes de réalisation le procédé de basculement qui vient d'être décrit. Il peut être intégré dans un des points d'accès de la pluralité de points d'accès, qui est par exemple un ensemble de points d'accès virtuels (LVAP) partageant le même identifiant BSS ou SSID. Il peut aussi être distinct des points d'accès et être intégré dans un équipement séparé contrôlant la pluralité de points d'accès, tel que par exemple un contrôleur, tel qu'utilisé en Wi-Fi steering. Si le procédé de basculement selon l'invention est utilisé en combinaison avec la méthode de Wi-Fi steering, le dispositif est de préférence intégré dans l'équipement hébergeant le contrôleur de Wi-Fi steering.

Les signaux Wi-Fi radar sont émis par au moins un, quelques, ou tous les points d'accès de la pluralité, qui effectuent des mesures sur les signaux réfléchis et les communiquent au dispositif.

L'invention concerne encore un point d'accès Wi-Fi comprenant un dispositif de basculement conforme à celui qui vient d'être décrit. L'invention concerne encore un réseau Wi-Fi comprenant d'une pluralité de points d'accès géolocalisés, et un contrôleur de la pluralité comprenant un dispositif de basculement conforme à celui qui vient d'être décrit.

L'invention concerne aussi un programme d'ordinateur comprenant des instructions qui, lorsque ces instructions sont exécutées par un processeur, conduisent celui-ci à mettre en œuvre les étapes du procédé de basculement, qui vient d'être décrit.

L'invention vise aussi un support d'informations lisible par un point d'accès Wi-Fi, et comportant des instructions d'un programme d'ordinateur tel que mentionné ci-dessus.

Le programme mentionné ci-dessus peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Le support d'informations mentionné ci-dessus peut être n'importe quelle entité ou dispositif capable de stocker le programme. Par exemple, un support peut comporter un moyen de stockage, tel qu'une ROM, par exemple un CD ROM ou une ROM de circuit microélectronique, ou encore un moyen d'enregistrement magnétique.

tique.

Un tel moyen de stockage peut par exemple être un disque dur, une mémoire flash, etc. D'autre part, un support d'informations peut être un support transmissible tel qu'un signal électrique ou optique, qui peut être acheminé via un câble électrique ou optique, par radio ou par d'autres moyens. Un programme selon l'invention peut être en particulier téléchargé sur un réseau de type Internet.

Alternativement, un support d'informations peut être un circuit intégré dans lequel un programme est incorporé, le circuit étant adapté pour exécuter ou pour être utilisé dans l'exécution du procédé en question.

## 4. **Présentation des figures**

D'autres avantages et caractéristiques de l'invention apparaitront plus clairement à la lecture de la description suivante d'un mode de réalisation particulier de l'invention, donné à titre de simple exemple illustratif et non limitatif, et des dessins annexés, parmi lesquels :

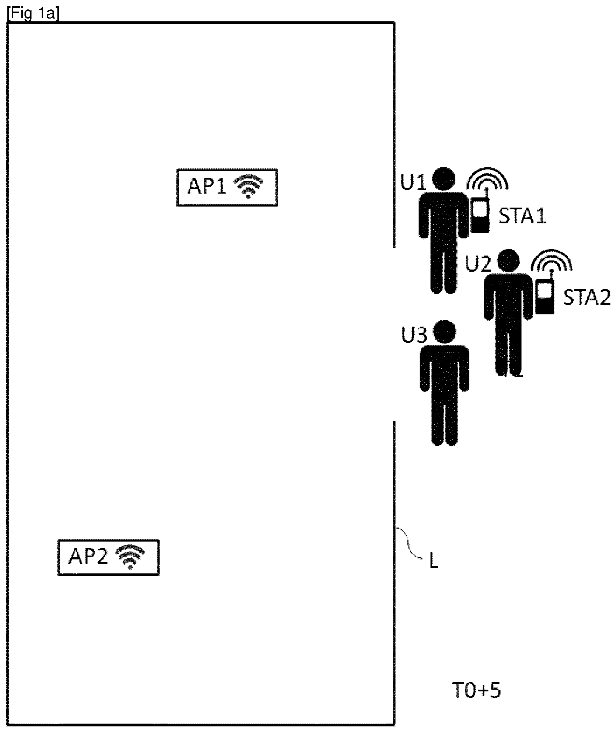

[Fig 1a] la **figure 1a** présente un exemple de mise en œuvre du procédé de basculement d'une station Wi-Fi entre points d'accès Wi-Fi, selon un mode de réalisation de l'invention (première partie de la mise en œuvre),

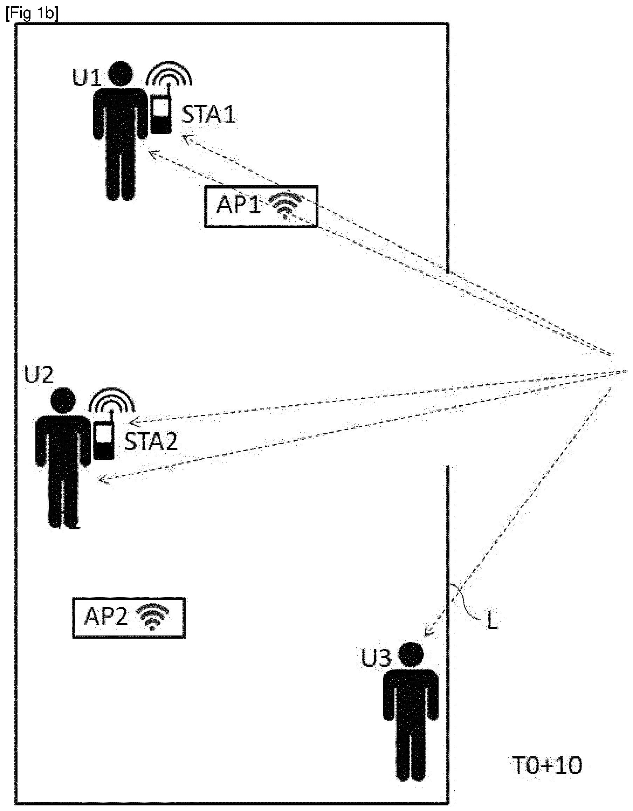

[Fig 1b] la **figure 1b** présente un exemple de mise en œuvre du procédé de basculement d'une station Wi-Fi entre deux points d'accès Wi-Fi, selon un mode de réalisation de l'invention (deuxième partie de la mise en œuvre),

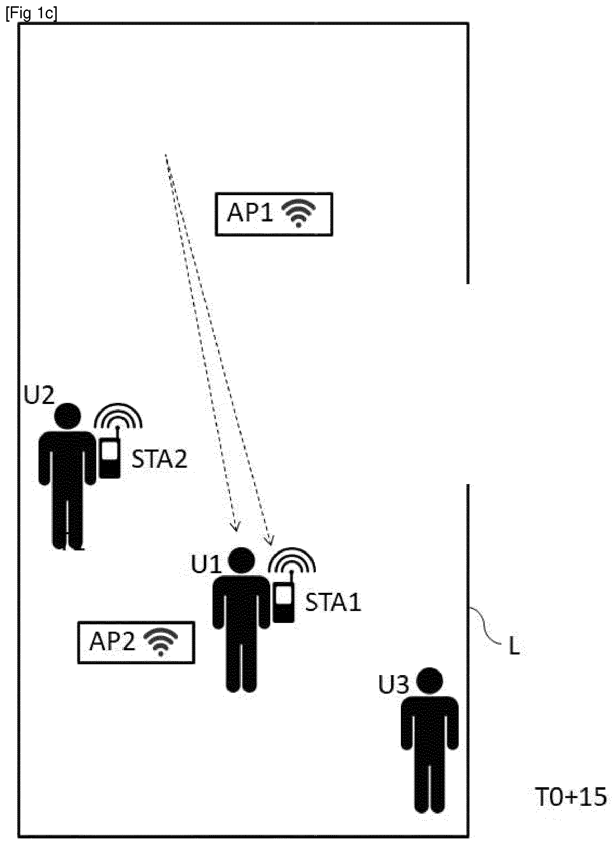

[Fig 1c] la **figure 1c** présente un exemple de mise en œuvre du procédé de basculement d'une station Wi-Fi entre deux points d'accès Wi-Fi, selon un mode de réalisation de l'invention (troisième partie de la mise en œuvre),

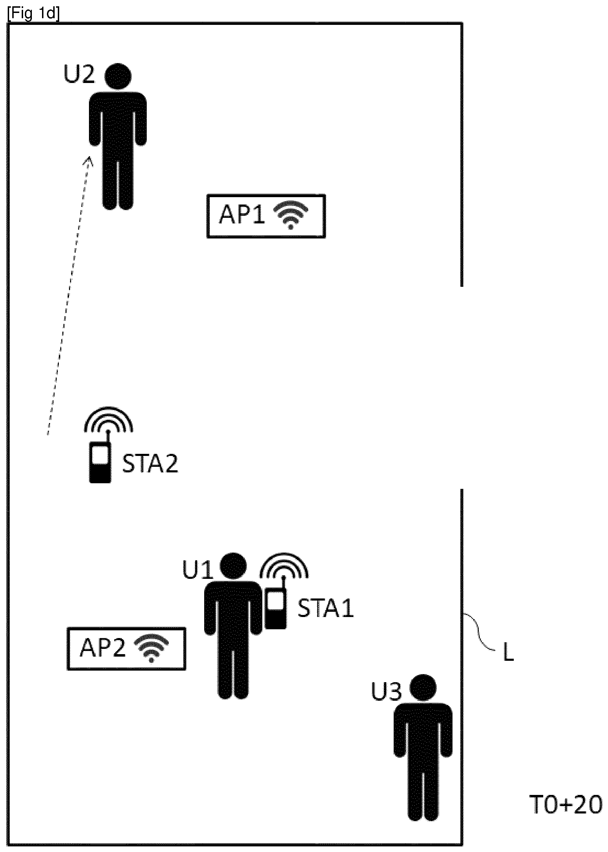

[Fig 1d] la **figure 1d** présente un exemple de mise en œuvre du procédé de basculement d'une station Wi-Fi entre deux points d'accès Wi-Fi, selon un mode de réalisation de l'invention (quatrième partie de la mise en œuvre),

[Fig 1 e] la **figure 1e** présente un exemple de mise en œuvre du procédé de basculement d'une station Wi-Fi entre deux points d'accès Wi-Fi, selon un mode de réalisation de l'invention (cinquième partie de la mise en œuvre),

[Fig 2] la **figure 2** présente un exemple de correspondance entre une atténuation de signal reçu par une station Wi-Fi, et la distance entre cette station et deux points d'accès Wi-Fi, selon un aspect de l'invention,

[Fig 3] la **figure 3** présente un exemple d'enchainement des étapes du procédé de basculement selon un aspect de l'invention,

[Fig 4] la **figure 4** présente un exemple de structure d'un dispositif mettant en œuvre le procédé de basculement d'une station Wi-Fi entre points d'accès Wi-Fi, selon un aspect de l'invention.

## 5. Description détaillée d'au moins un mode de réalisation de l'invention

Dans la suite de la description, il est entendu que l'invention s'applique à toutes les déclinaisons des normes IEEE 802.11. Les points d'accès Wi-Fi notamment, peuvent être physiques ou virtuels (LVAP). Les termes "connexion" et "se connecter" sont à prendre dans le contexte Wi-Fi, et sont respectivement synonymes de "association" et "s'associer", dans ce document.

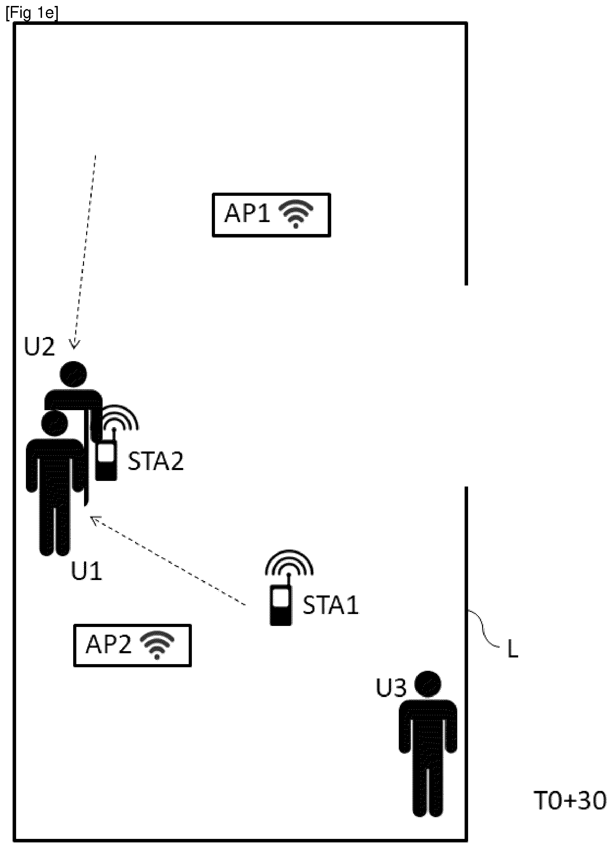

Les figures 1a, 1b, 1c, 1d et 1e présentent un exemple de mise en œuvre du procédé de basculement d'une station Wi-Fi entre points d'accès Wi-Fi, selon un mode de réalisation de l'invention (première partie de la mise en œuvre) où 3 personnes avec 2 stations Wi-Fi entrent et se dispersent dans un local L équipé de 2 points d'accès Wi-Fi distincts.

Les stations STA1 et STA2 sont par exemple des "smartphones" dotés d'une fonction Wi-Fi. La station STA1 est portée par son utilisateur, la personne U1, aussi appelée transporteur U1 dans ce document. La station STA2 est portée par son utilisateur, la personne U2, aussi appelée transporteur U2 dans ce document. La personne U3 ne porte aucune station Wi-Fi sur elle, mais par commodité est aussi appelée transporteur dans ce document (en théorie elle peut à tout moment commencer à porter une station Wi-Fi). Le point d'accès AP1 est dans une passerelle d'accès domestique, par exemple une Livebox (nom commercial de la passerelle de l'opérateur Orange, fournisseur d'accès Internet pour les particuliers en France). Le point d'accès AP2 est dans un répéteur Wi-Fi permettant de fournir l'accès Internet de la Livebox dans des pièces du local L, trop éloignées du point d'accès AP1 pour recevoir convenablement son signal Wi-Fi. Les points d'accès AP1 et AP2 peuvent forment un réseau Wi-Fi dans le local L.

Il existe aussi un dispositif de contrôle C, ou contrôleur, non illustré, qui peut être hébergé dans la Livebox avec le point d'accès AP1, ou être séparé physiquement des points d'accès dans un équipement distinct, à l'intérieur ou à l'extérieur du local L. Un lien de communication est établi entre le contrôleur et chacun des points d'accès AP1 et AP2, par exemple par Wi-Fi, ou par tout autre moyen, filaire ou sans fil.

A l'instant T0, les transporteurs U1, U2 et U3 et les stations STA1 et STA2 sont trop éloignées du local L pour être sous la portée des points d'accès AP1 et AP2. Pour le contrôleur C, aucun lien n'existe encore entre des transporteurs et des stations Wi-Fi.

A l'instant T0+5 (figure 1a), les 3 transporteurs U1, U2 et U3 entrent dans le local L en même temps que les stations STA1 et STA2. Comme le point d'accès AP1 est le plus proche de l'entrée, les stations STA1 et STA2 se connectent à ce point d'accès. Comme les 3 transporteurs et les 2 stations sont encore regroupées au même endroit près de l'entrée, selon la technique de Wi-Fi sensing détaillée plus loin, le contrôleur C détermine que les transporteurs U1, U2 et U3 sont à 8m du point d'accès AP1. Le contrôleur C détermine également que les stations STA1 et STA2 sont connectées au point d'accès AP1 à -55dBm d'atténuation, ce qui correspond à une distance de 8m. Le contrôleur C en déduit que tous les transporteurs et toutes les stations sont au même endroit, et établit les liens logiques suivants :

- lien logique

$$LL1 = (U1)+(STA1, STA2)$$

signifiant que le transporteur U1 est lié à la fois à la station STA1 et à la station STA2,
- lien logique

$$LL2 = (U2)+(STA1, STA2)$$

signifiant que le transporteur U2 est lié à la fois à la station STA1 et à la station STA2,
- lien logique

$$LL3 = (U3)+(STA1, STA2)$$

signifiant que le transporteur U3 est lié à la fois à la station STA1 et à la station STA2.

A l'instant T0+1 0 (figure 1b), les transporteurs se dispersent dans le local L. Le contrôleur C détermine que la station STA1 est connectée au point d'accès AP1 à -30dBm d'atténuation, ce qui correspond à une distance de 1m, et que la station STA2 est connectée au point d'accès AP2 à -52dBm d'atténuation, ce qui correspond à une distance de 7m. Par simplicité, on ne détaille pas ici les manières possibles dont la station STA2 a basculé du point d'accès AP1 vers le point d'accès AP2. Cela peut être selon une technique antérieure, à l'initiative de la station (par "handover") ou du contrôleur (par steering), ou par le même procédé que celui ici détaillé, c'est à dire selon l'invention.

Le contrôleur C détermine également par Wi-Fi sensing que :

- un transporteur est à 1m point d'accès AP1 et à 14m du point d'accès AP2,
- un transporteur est à 16m point d'accès AP1 et à 7m du point d'accès AP2,
- un transporteur est à 14m point d'accès AP1 et à 13m du point d'accès AP2.

Le contrôleur C en déduit que :

- le transporteur qui est à 1m du point d'accès AP1 est au même endroit que la station STA1,
- le transporteur qui est à 7m du point d'accès AP2 est au même endroit que la station STA2,

- le transporteur qui est à 14m point d'accès AP1 et à 13m du point d'accès AP2 n'est pas à un endroit où se trouve aussi une station.

Le contrôleur C met donc à jour les liens logiques qu'il a déterminé à l'instant T0+5 :

- lien logique

$$LL1 = (U1)+(STA1)$$

signifiant que le transporteur U1 est lié à la station STA1,
- lien logique

$$LL2 = (U2)+(STA2)$$

signifiant que le transporteur U2 est lié à la station STA2,
- lien logique

$$LL3 = (U3)$$

signifiant que le transporteur U3 n'est lié à aucune station.

De plus, le contrôleur C mémorise les liens antérieurs tels qu'ils étaient avant la mise à jour :

- lien logique

$$LL1\_ANT = (U1)+(STA1, STA2)$$

- lien logique

$$LL2\_ANT = (U2)+(STA1, STA2)$$

- lien logique

$$LL3\_ANT = (U3)+(STA1, STA2)$$

On notera que l'ordre et la numérotation des liens et des transporteurs ont été déterminés aléatoirement à la création des liens logiques à l'instant T0+5, et sont conservés par la suite.
A l'instant T0+15 (figure 1c), le transporteur U1 se déplace, avec la station STA1. Les transporteurs U2 et U3 ne bougent pas. Le contrôleur C détermine que la station STA1 est connectée au point d'accès AP1 à -50dBm d'atténuation, ce qui correspond à une distance de 6m (situation nouvelle par rapport à l'instant T0+10), et que la station STA2 est connectée au point d'accès AP2 à -52dBm d'atténuation, ce qui correspond à une distance de 7m (situation inchangée par rapport à l'instant T0+10).
Le contrôleur C détermine également par Wi-Fi sensing que :

- un transporteur est à 6m point d'accès AP1 et à 4m du point d'accès AP2 (situation nouvelle par rapport à l'instant T0+10),
- un transporteur est à 16m point d'accès AP1 et à 7m du point d'accès AP2 (situation inchangée par rapport à l'instant T0+10),
- un transporteur est à 14m point d'accès AP1 et à 13m du point d'accès AP2 (situation inchangée par rapport à l'instant T0+10).

Le contrôleur C en déduit que :

- le transporteur qui est à 6m du point d'accès AP1 est au même endroit que la station STA1,
- le transporteur qui est à 7m du point d'accès AP2 est au même endroit que la station STA2,
- le transporteur qui est à 14m point d'accès AP1 et à 13m du point d'accès AP2 n'est pas à un endroit où se trouve aussi une station.

Le contrôleur C ne modifie donc pas les liens logiques qu'il a mis à jour à l'instant T0+10, qui restent :

- lien logique

$$LL1 = (U1)+(STA1)$$

- lien logique

$$LL2 = (U2)+(STA2)$$

- lien logique

$$LL3 = (U3)$$

Le contrôleur C ne modifie pas non plus les liens antérieurs mémorisés, qui restent :

- lien logique

$$LL1\_ANT = (U1)+(STA1, STA2)$$

- lien logique

$$LL2\_ANT = (U2)+(STA1, STA2)$$

- lien logique

$$LL3\_ANT = (U3)+(STA1, STA2)$$

En revanche, ce qui a changé est que, grâce au lien logique LL1, le contrôleur C détecte que la position de la station STA1, déterminée par Wi-Fi sensing avec précision car c'est celle du transporteur U1, est à présent plus proche du point d'accès AP2 que du point d'accès AP1. En conséquence, le contrôleur C prend la décision de faire basculer la connexion de la station STA1 du point d'accès AP1 vers le point d'accès AP2. Le contrôleur C émet un ordre de basculement vers le point d'accès AP1, par exemple par une méthode connue sous le nom de EasyMesh, définie par l'organisme de standardisation Wi-Fi Alliance. Le point d'accès AP1 peut alors par exemple émettre vers la station STA1 une liste de points d'accès auxquels la station est invitée à se connecter, ne contenant que le point d'accès AP2 (par exemple un message de type BTM Request).

A l'instant T0+20 (figure 1d), le transporteur U2 se déplace, sans la station STA2. Les transporteurs U1 et U3 ne bougent pas. Le contrôleur C détermine que la station STA1 est connectée au point d'accès AP1 à -50dBm d'atténuation, ce qui correspond à une distance de 6m (situation inchangée par rapport à l'instant T0+15), et que la station STA2 est connectée au point d'accès AP2 à -52dBm d'atténuation, ce qui correspond à une distance de 7m (situation inchangée par rapport à l'instant T0+15).

Le contrôleur C détermine également par Wi-Fi sensing que :

- un transporteur est à 6m point d'accès AP1 et à 4m du point d'accès AP2 (situation inchangée par rapport à l'instant T0+15),
- un transporteur est à 7m point d'accès AP1 et à 14m du point d'accès AP2 (situation nouvelle par rapport à l'instant T0+15),
- un transporteur est à 14m point d'accès AP1 et à 13m du point d'accès AP2 (situation inchangée par rapport à l'instant T0+15).

Le contrôleur C en déduit que :

- le transporteur qui est à 6m du point d'accès AP1 est au même endroit que la station STA1,
- le transporteur qui est à 14m du point d'accès AP2 n'est plus au même endroit que la station STA2, et n'est pas non plus au même endroit que la station STA1,
- le transporteur qui est à 14m point d'accès AP1 et à 13m du point d'accès AP2 n'est pas à un endroit où se trouve aussi une station.

Le contrôleur C met donc à jour les liens logiques, de la façon suivante :

- lien logique

$$LL1 = (U1)+(STA1)$$

(comme avant),
- lien logique

$$LL2 = (U2)$$

signifiant que le transporteur U2 n'est maintenant lié à aucune station,
- lien logique

$$LL3 = (U3)$$

(comme avant).

Le contrôleur C met également à jour les liens logiques antérieurs mémorisés, de la façon suivante :

- lien logique

$$LL1\_ANT = (U1)+(STA1, STA2)$$

(inchangé),
- lien logique

$$LL2\_ANT = (U2)+(STA2)$$

(nouveau, signifiant que le transporteur U2 était lié précédemment à la station STA2),
- lien logique

$$LL3\_ANT = (U3)+(STA1, STA2)$$

(inchangé).

A l'instant T0+30 (figure 1e), le transporteur U2 se déplace à nouveau, vers la station STA2, qu'il reprend en main. Le transporteur U1 se déplace au même endroit que U2, mais sans la station STA1 qu'il a déposée. Par les mécanismes exposés ci-haut, Le contrôleur C détermine que U1, U2 et STA2 sont au même endroit, ce qui pourrait poser une difficulté au contrôleur C pour déterminer comment mettre à jour les liens logiques existants. En effet, deux nouveaux liens logiques sont possibles : le transporteur U2 est lié à la station STA2, ou le transporteur U1 est lié à la station STA2. En consultant les liens logiques antérieurs mémorisés, le contrôleur C constate qu'un lien antérieur LL2_ANT liait 1 à 1 le transporteur U2 à la station STA2, et qu'aucun lien antérieur ne liait 1 à 1 le transporteur U1 à la station STA2. Les liens antérieurs mémorisés permettent au contrôleur C de privilégier celui qui est plus probable de se reproduire, qui est le lien LL2_ANT.

Le contrôleur C met donc à jour les liens logiques, de la façon suivante :

- lien logique

$$LL1 = (U1)$$

mis à jour ; signifiant que le transporteur U1 n'est maintenant lié à aucune station,
- lien logique

$$LL2 = (U2, STA2)$$

mis à jour ; signifiant que le transporteur U2 est lié à la station STA2,

- lien logique

$$LL3 = (U3)$$

(inchangé).

La mémorisation des liens antérieurs permet d'éviter au contrôleur C de devoir être capable de distinguer entre les différents transporteurs. Il est à noter que dans ce mode de réalisation un lien logique lie un seul transporteur à un nombre quelconque de stations (0, 1, ou plusieurs). Un autre mode de réalisation est possible ou un lien logique lie une seule station à un nombre quelconque de transporteurs.

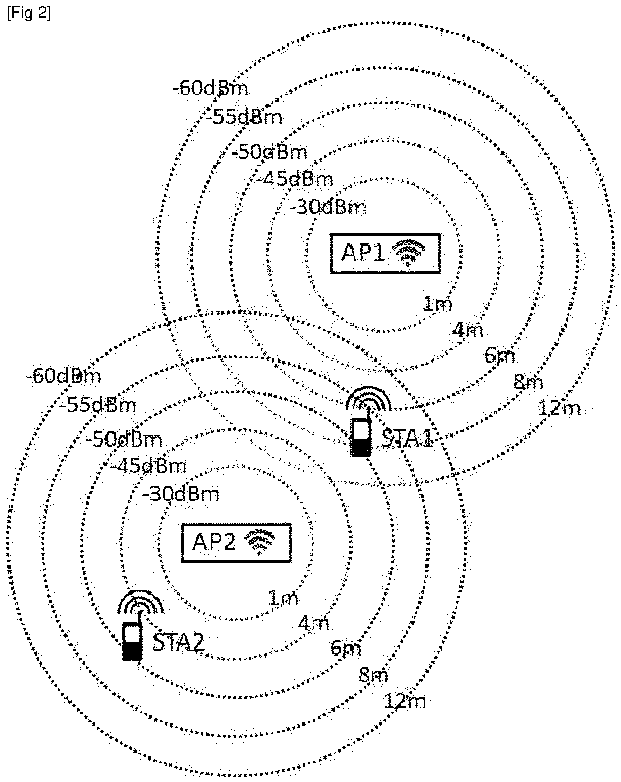

La **figure 2** présente un exemple de correspondance entre une atténuation de signal reçu par une station Wi-Fi, et la distance entre cette station et deux points d'accès Wi-Fi, selon un aspect de l'invention.

Dans cet exemple, le point d'accès AP1 reçoit de la station STA1 un signal avec une valeur de paramètre RSSI égale à -50dBm. Le point d'accès AP2 quant à lui reçoit de la station STA2 un signal avec une valeur de paramètre RSSI égale à -45dBm. Selon des abaques prédéterminés en fonction du type de station Wi-Fi (Wi-Fi 4, Wi-Fi 5 ou Wi-Fi 6), et possiblement en fonction d'autres paramètres tels que la configuration de l'environnement (intérieur avec cloison de types particuliers, etc.), une correspondance peut être faite entre la valeur du paramètre RSSI et la distance entre la station et le point d'accès auquel elle est connectée.

Dans l'exemple de la figure 2 où un tel abaque est illustré, le contrôleur des points d'accès peut déterminer, uniquement sur la base des paramètre RSSI, que la station STA1 se trouve à 6m (RSSI = -50dBm) du point d'accès AP1, et que la station STA2 se trouve à 4m (RSSI = -45dBm) du point d'accès AP2. En théorie, si le contrôleur peut également récupérer les paramètres RSSI du point d'accès AP2 mesurés sur un signal de la station STA1 même si cette station n'est pas connectée au point d'accès AP2, et le contrôleur peut alors en outre déterminer que la station STA1 se trouve à 8m (RSSI = -55dBm) du point d'accès AP2, et peut par triangulation estimer la position de la station STA1 plus précisément.

Ceci est en revanche impossible pour la station STA2, connectée au point d'accès AP2 mais hors de portée du point d'accès AP1.

Grâce à son mécanisme radar, le Wi-Fi sensing permet de géolocaliser, avec une précision supérieure à l'estimation faite à l'aide du paramètre RSSI, n'importe quel transporteur de station depuis un seul point d'accès, sans avoir recours à la triangulation. Il est toutefois nécessaire de pouvoir lier le transporteur à la bonne station, comme cela a été décrit plus haut.

Le Wi-Fi sensing utilise les signaux Wi-Fi existants émis par un point d'accès pour détecter des évènements et des changements, comme par exemple des mouvements de corps ou d'objets autour du point d'accès. Le point d'accès traite les signaux reçus par réflexion, comme pour un radar, et remonte des informations relatives à ces signaux réfléchis à un dispositif de contrôle (tel que le contrôleur C) qui effectue les calculs nécessaires pour déterminer la position du corps ou de l'objet.

En pratique, cela signifie que les réseaux Wi-Fi peuvent être utilisés pour identifier et mesurer des distances, des vitesses linéaires ou angulaires, détecter des mouvements (voire de simples gestes ou respirations), présences, proximités, pour des objets, personnes ou animaux, dans une pièce, une maison, une voiture ou un bâtiment.

Selon un mode de réalisation, les trames de balises (beacons) émises par les points d'accès sont utilisés comme signaux "Wi-Fi radar". Ces trames étant émises toutes les 100ms, une mise à jour de la position d'une personne est possible toutes les 100ms. Ceci est une fréquence bien supérieure à celle qu'il est possible d'atteindre avec la technique du Wi-Fi steering.

Le Wi-fi sensing, c'est-à-dire la détermination de la position d'un corps à l'aide des signaux Wi-Fi existant utilisés comme signaux radar, est possible à partir du moment où un point d'accès est fonctionnel. Le Wi-fi sensing peut être effectué sur toutes les bandes de fréquences utilisées par un point d'accès physique, et bien entendu de façon plus générale sur toutes les bandes de fréquences de tous les points d'accès physiques si tant est que ces bandes soient opérationnelles.

Dans le cas simple de l'utilisation sur une seule bande de fréquence, comme les points d'accès ne sont pas temporellement synchronisés, ils émettent leurs trames de balise de façon non coordonnées mais tous à la même fréquence (tous les 100ms). Il est donc possible d'envoyer au contrôleur, toutes les 100ms, des informations pour localiser des personnes au contrôleur.

Cela représente une grande quantité d'informations à envoyer et il n'est pas nécessaire que tous les points d'accès le fassent en permanence. En effet, après l'établissement d'un lien logique entre la personne (le transporteur) et une station selon la méthode présentée ci-haut, si la station est connectée par exemple au point d'accès AP1, le Wi-Fi sensing sera déclenché sur des points d'accès autre que AP1 uniquement si la personne s'éloigne du point d'accès AP1 au-delà d'un certain seuil, et/ou se rapproche d'un autre point d'accès en deçà d'un certain seuil. Il est aussi possible de déclencher le mode Wi-Fi sensing uniquement sur le point d'accès devenu le plus proche de la personne, et pas sur les autres points d'accès.

Le contrôleur peut alors ordonner à ce point d'accès de surveiller :

- la station à l'aide des mécanismes de la méthode de Wi-Fi steering (basée sur le RSSI),

- et/ou la personne liée à la station à l'aide du Wi-Fi sensing,

afin de déclencher un basculement la connexion de la station vers ce point d'accès, dès que des conditions prédéterminées de basculement sont remplies. Ces conditions peuvent par exemple être les mêmes que celles du Wi-Fi steering, c'est-à-dire des valeurs de RSSI remontées par la station avec le nouveau point d'accès supérieures à celles remontée avec l'ancien.

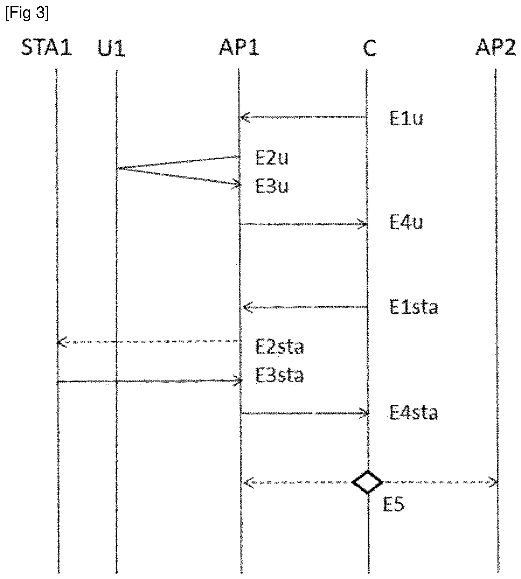

La **figure 3** présente un exemple d'enchainement des étapes du procédé de basculement selon un aspect de l'invention.

Les étapes du procédé peuvent être divisées en 3 groupes. Un premier groupe représente le mode de fonctionnement dit Wi-Fi sensing, et est composé des étapes E1u à E4u. Un deuxième groupe représente une partie du mode de fonctionnement dit Wi-Fi steering (sans la décision de basculement), et est composé des étapes E1sta à E4sta. Le dernier groupe est celui de l'étape de décision de basculement E5.

Lors de l'étape E1u, le contrôleur C commande au point d'accès AP1 de passer en mode Wi-Fi sensing, c'est-à-dire de surveiller un corps en mouvement autour de lui.

En réponse, lors de l'étape E2u, le point d'accès AP1 émet une trames Wi-Fi, par exemple une trame de balise (beacon), dite signal Wi-Fi radar. Ce signal rebondit sur le transporteur U1 et revient vers le point d'accès qui le reçoit dégradé lors de l'étape E3u.

Lors de l'étape E4u, le point d'accès AP1 émet vers le contrôleur C une information relative à ce signal. Cette information est par exemple une transformation FFT (Fast Fourier Transform) du signal reçu par le point d'accès. Une telle information permet de calculer une position par rapport au point d'accès, selon une technique telle que celle divulguée par exemple dans l'article "Multi-Person Localization via RF Body Reflections", de Fadel Adib et al., NSDI'15: Proceedings of the 12th USENIX Conference on Networked Systems Design and Implementation, Mai 2015. Ce calcul peut être fait par le contrôleur, ou par le point d'accès. Dans ce dernier cas, l'information relative au signal émise par le point d'accès est un ensemble de coordonnées, par exemple une distance et un angle.

Les étapes E2u et E3u peuvent être répétées à la même fréquence que les trames de balise, soit toutes les 100ms. L'étape E4u peut être répétée à une fréquence inférieure afin de ne pas surcharger le contrôleur C.

Lors de l'étape E1sta, le contrôleur C commande au point d'accès AP1 de passer en mode Wi-Fi steering partiel, c'est-à-dire de surveiller la station STA1 qui lui est connectée en monitorant son paramètre RSSI, mais sans décider un basculement éventuel de la connexion.

Lors de l'étape E3sta, éventuellement en réponse à une trame Wi-Fi émise lors d'une étape E2sta appelant une réponse de la part de la station STA1, cette station émet vers le point d'accès AP1 une trame Wi-Fi constitutive d'un signal duquel le point d'accès AP1 extrait par exemple une valeur du paramètre RSSI, représentatif de la puissance du signal émis par la station, à sa réception par le point d'accès.

Lors de l'étape E4sta, le point d'accès AP1 émet vers le contrôleur C la valeur du paramètre RSSI.

L'étape E3sta peut être répétée chaque fois que la station STA1 émet vers le point d'accès AP1 une trame Wi-Fi. L'étape E4sta peut être répétée à une fréquence inférieure afin de ne pas surcharger le contrôleur C.

Lors de l'étape E5, le contrôleur C traite les informations qu'il a reçues de la part du point d'accès AP1 et calcule la position du transporteur U1, la distance entre U1 et le point d'accès AP1, et/ou la distance entre la station STA1 et le point d'accès AP1. Lors de cette étape, le contrôleur C peut créer un lien logique entre le transporteur U1 et la station STA1 si aucun lien n'existe encore entre eux, et si la position du transporteur U1 correspond à une position possible de la station STA1 étant donné sa distance avec le point d'accès AP1. Autrement, lors de cette étape E5, si cette position et cette distance ne correspondent plus, et que le lien logique existe déjà, le contrôleur peut le mettre à jour.

Enfin, si le lien existe, et que la position du transporteur U1 a évolué pour se rapprocher d'un point d'accès autre que AP1, par exemple le point d'accès AP2, le contrôleur peut décider de faire basculer la station STA1 vers le point d'accès AP2. Alternativement, par exemple si ce rapprochement n'est pas suffisant (seuil prédéfini non atteint) il peut anticiper un tel basculement en commandant au point d'accès AP2 de passer en mode Wi-Fi sensing (étape E1u appliquée à AP2), ou en mode steering partiel (étape E1sta appliquée à AP2), ce qui est possible même sans que la station STA1 soit connectée au point d'accès AP2.

La fréquence de l'étape E5 est indépendante de celles des autres étapes.

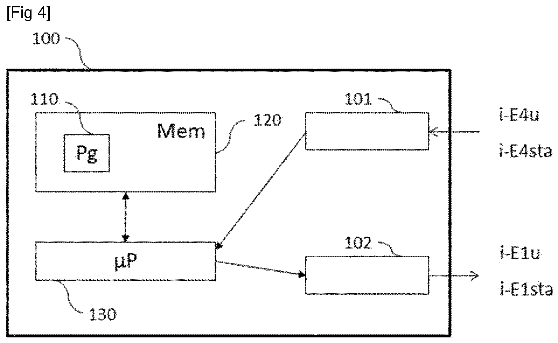

La **figure 4** présente un exemple de structure d'un dispositif mettant en œuvre le procédé de basculement d'une station Wi-Fi entre points d'accès Wi-Fi, selon un aspect de l'invention.

Le dispositif 100 met en œuvre le procédé de basculement, dont différents modes de réalisation viennent d'être décrits.

Un tel dispositif 100 peut être mis en œuvre dans un équipement contrôlant une pluralité de points d'accès Wi-Fi. Cet équipement, par exemple le contrôleur C, peut être distinct des points d'accès contrôlés ou intégré dans l'un d'eux. Ce point d'accès Wi-Fi, par exemple le point d'accès AP1, peut être une passerelle domestique ou professionnelle, ou un routeur domestique ou professionnel, d'accès à Internet.

Par exemple, le dispositif 100 comprend un récepteur 101, un émetteur 102, une unité de traitement 130, équipée par exemple d'un microprocesseur μP, et

pilotée par un programme d'ordinateur 110, stocké dans une mémoire 120 et mettant en œuvre le procédé de basculement selon l'invention. A l'initialisation, les instructions de code du programme d'ordinateur 110 sont par exemple chargées dans une mémoire RAM, avant d'être exécutées par le processeur de l'unité de traitement 130.

Une telle mémoire 120, un tel processeur de l'unité de traitement 130, un tel récepteur 101 et un tel émetteur 102 sont aptes à, et configurés pour :

- établir un lien logique entre la station et un transporteur de la station, sur la base d'une comparaison entre une première position du transporteur et au moins une valeur relative à un signal émis par la station, et
- décider un basculement sur la base d'une deuxième position du transporteur.

Avantageusement, ils sont également aptes à, et configurés pour :

- mettre à jour le lien logique après l'établissement, sur la base d'une comparaison entre une nouvelle position du transporteur et au moins une nouvelle valeur relative à un signal émis par la station,
- mémoriser le lien logique avant la mise à jour,
- émettre une commande i-E1u à un point d'accès lui ordonnant de passer en mode Wi-Fi sensing, c'est-à-dire de surveiller un corps autour de lui,
- recevoir en réponse une information i-E4u permet d'obtenir ou de calculer une position du corps par rapport au point d'accès,
- émettre une commande i-E1sta à un point d'accès lui ordonnant de passer en mode Wi-Fi steering partiel, c'est-à-dire de surveiller une station en monitorant le paramètre RSSI de la station, mais sans décider un basculement éventuel de la connexion,
- recevoir en réponse une information i-E4sta comprenant une valeur du paramètre RSSI.

Les entités décrites et comprises dans les dispositifs décrits en relation avec la figure 4 peuvent être matérielles ou logicielles. La figure 4 illustre seulement une manière particulière, parmi plusieurs possibles, de réaliser le procédé détaillé ci-dessus, en relation avec les figures précédentes. En effet, la technique de l'invention se réalise indifféremment sur une machine de calcul reprogrammable (un ordinateur PC, un processeur DSP ou un microcontrôleur) exécutant un programme comprenant une séquence d'instructions, ou sur une machine de calcul dédiée (par exemple un ensemble de portes logiques comme un FPGA ou un ASIC, ou tout autre module matériel). Dans le cas où l'invention est implantée sur une machine de calcul reprogrammable, le programme correspondant (c'est-à-dire la séquence d'instructions) pourra être stocké dans un médium de stockage amovible (tel que par exemple une clé USB, une disquette, un CD-ROM ou un DVD-ROM) ou non, ce médium de stockage étant lisible partiellement ou totalement par un ordinateur ou un processeur.

**Revendications**

1. **Procédé** de basculement d'une connexion d'une station Wi-Fi mobile (STA1), d'un premier point d'accès (AP1) d'une pluralité de points d'accès Wi-Fi, vers un deuxième point d'accès (AP2) de la pluralité de points d'accès Wi-Fi, le procédé comprenant :

   • un établissement d'un lien logique entre la station et un transporteur (U1) de la station, sur la base d'une comparaison entre une première position du transporteur et au moins une valeur relative à un signal émis par la station ;
   • une décision (E5) de basculement sur la base d'une deuxième position du transporteur,

   où la première position et la deuxième position du transporteur sont déterminées par au moins un point d'accès de la pluralité de points d'accès Wi-Fi, sur la base d'un signal réfléchi par le transporteur, dit signal Wi-Fi radar.

2. **Procédé** selon la revendication 1, où le signal Wi-Fi radar est un signal de balise.

3. **Procédé** selon l'une des revendications précédentes, où l'au moins une valeur relative à un signal émis par la station est traduite en une distance de la station par rapport à un point d'accès ayant émis le signal reçu par la station, selon une grille de correspondance prédéterminée.

4. **Procédé** selon l'une des revendications précédentes, comprenant au moins une mise à jour du lien logique après l'établissement, sur la base d'une comparaison entre une nouvelle position du transporteur et au moins une nouvelle valeur relative à un signal émis par la station.

5. **Procédé** selon la revendication 4, comprenant une mémorisation du lien logique avant la mise à jour.

6. **Procédé** selon l'une des revendications précédentes, où le lien logique est établi à l'aide d'au moins deux valeurs relatives à un signal émis par la station, mesurées par au moins deux points d'accès de la pluralité de points d'accès Wi-Fi.

7. **Procédé** selon l'une des revendications précédentes, où l'au moins une valeur relative à un signal émis par la station est la valeur d'un paramètre RSSI.

8. **Procédé** selon l'une des revendications précédentes, où la décision de basculement est effectuée en outre sur la base d'une valeur d'un paramètre RSSI.

9. **Procédé** selon l'une des revendications précédentes, où l'établissement du lien logique est réalisé sur la base de plusieurs valeurs relatives à un signal émis par la station, reçu respectivement par plusieurs points d'accès.

10. **Dispositif** (100) de basculement d'une connexion d'une station Wi-Fi mobile (STA1), d'un premier point d'accès (AP1) d'une pluralité de points d'accès Wi-Fi, vers un deuxième point d'accès (AP2) de la pluralité de points d'accès Wi-Fi, le dispositif comprenant un récepteur (101), un émetteur (102), un processeur (130) et une mémoire (120) couplée au processeur avec des instructions destinées à être exécutées par le processeur pour :

   • établir un lien logique entre la station et un transporteur de la station (U1), sur la base d'une comparaison entre une première position du transporteur et au moins une valeur relative à un signal émis par la station ;
   • décider un basculement sur la base d'une deuxième position du transporteur,

   la première position et la deuxième position du transporteur étant déterminées par au moins un point d'accès de la pluralité de points d'accès Wi-Fi, sur la base d'un signal réfléchi par le transporteur, dit signal Wi-Fi radar.

11. **Point d'accès Wi-Fi** comprenant un dispositif conforme à la revendication 10.

12. **Réseau Wi-Fi** comprenant une pluralité de points d'accès géolocalisés, et un contrôleur apte à contrôler la pluralité de points d'accès géolocalisés, le contrôleur comprenant un dispositif conforme à la revendication 10.

13. **Programme d'ordinateur** (110), comprenant des instructions qui, lorsque ces instructions sont exécutées par un processeur, conduisent celui-ci à mettre en œuvre les étapes du procédé de basculement, selon la revendication 1.

14. **Support d'informations** lisible par un ordinateur d'un point d'accès Wi-Fi, et comportant des instructions d'un programme d'ordinateur (110) conforme à la revendication 13.

**Patentansprüche**

1. Verfahren zum Umschalten einer Verbindung einer mobilen Wi-Fi-Station (STA1) von einem ersten Zugangspunkt (AP1) aus einer Vielzahl von Wi-Fi-Zugangspunkten zu einem zweiten Zugangspunkt (AP2) aus der Vielzahl von Wi-Fi-Zugangspunkten, wobei das Verfahren Folgendes aufweist:

   • das Herstellen einer logischen Verbindung zwischen der Station und einem Träger (U1) der Station basierend auf einem Vergleich zwischen einer ersten Position des Trägers und mindestens einem Wert, der sich auf ein von der Station gesendetes Signal bezieht;
   • die Entscheidung zum Umschalten (E5) basierend auf einer zweiten Position des Trägers,

   wobei die erste und die zweite Position des Trägers durch mindestens einen aus der Vielzahl von Wi-Fi-Zugangspunkten basierend auf einem vom Träger reflektierten Signal, dem sogenannten Wi-Fi-Radarsignal, bestimmt werden.

2. Verfahren nach Anspruch 1, wobei das Wi-Fi-Radarsignal ein Beacon-Signal ist.

3. Verfahren nach einem der vorhergehenden Ansprüche, wobei der mindestens eine Wert, der sich auf ein von der Station gesendetes Signal bezieht, anhand einer vorgegebenen Zuordnungstabelle in eine Entfernung der Station zu einem Zugangspunkt umgerechnet wird, der das von der Station empfangene Signal gesendet hat.

4. Verfahren nach einem der vorhergehenden Ansprüche, das mindestens eine Aktualisierung der logischen Verbindung nach dem Aufbau beinhaltet, basierend auf einem Vergleich zwischen einer neuen Position des Trägers und mindestens einem neuen Wert, der sich auf ein von der Station gesendetes Signal bezieht.

5. Verfahren nach Anspruch 4, das das Speichern der logischen Verbindung vor der Aktualisierung aufweist.

6. Verfahren nach einem der vorhergehenden Ansprüche, wobei die logische Verbindung anhand von mindestens zwei Werten hergestellt wird, die sich auf ein von der Station gesendetes Signal beziehen und von mindestens zwei der mehreren Wi-Fi-Zugangspunkte gemessen werden.

7. Verfahren nach einem der vorhergehenden Ansprüche, wobei der mindestens eine Wert, der sich auf ein von der Station gesendetes Signal bezieht, der Wert eines RSSI-Parameters ist.

8. Verfahren nach einem der vorhergehenden Ansprüche, wobei die Entscheidung zum Umschalten darüber hinaus basierend auf einem Wert eines RSSI-Parameters getroffen wird.

9. Verfahren nach einem der vorhergehenden Ansprüche, wobei die Herstellung der logischen Verbindung basierend auf mehreren Werten erfolgt, die sich auf ein von der Station gesendetes und jeweils von mehreren Zugangspunkten empfangenes Signal beziehen.

10. Vorrichtung (100) zum Umschalten einer Verbindung einer mobilen Wi-Fi-Station (STA1) von einem ersten Zugangspunkt (AP1) aus einer Vielzahl von Wi-Fi-Zugangspunkten zu einem zweiten Zugangspunkt (AP2) aus der Vielzahl von Wi-Fi-Zugangspunkten, wobei die Vorrichtung einen Empfänger (101), einen Sender (102), einen Prozessor (130) und einen Speicher (120) aufweist, der mit dem Prozessor gekoppelt ist und Anweisungen enthält, die durch den Prozessor auszuführen sind, zum:

   • Herstellen einer logischen Verbindung zwischen der Station und einem Träger (U1) der Station basierend auf einem Vergleich zwischen einer ersten Position des Trägers und mindestens einem Wert, der sich auf ein von der Station gesendetes Signal bezieht;
   • Entscheiden des Umschaltens basierend auf einer zweiten Position des Trägers,

   wobei die erste und die zweite Position des Trägers durch mindestens einen aus der Vielzahl von Wi-Fi-Zugangspunkten basierend auf einem vom Träger reflektierten Signal, dem sogenannten Wi-Fi-Radarsignal, bestimmt werden.

11. Wi-Fi-Zugangspunkt, der eine Vorrichtung nach Anspruch 10 aufweist.

12. Wi-Fi-Netzwerk, das eine Vielzahl von geolokalisierten Zugangspunkten und einen Controller aufweist, der zur Steuerung der Vielzahl von geolokalisierten Zugangspunkten fähig ist, wobei der Controller eine Vorrichtung nach Anspruch 10 enthält.

13. Computerprogramm (110), das Anweisungen enthält, die, wenn diese Anweisungen von einem Prozessor ausgeführt werden, diesen dazu veranlassen, die Schritte des Verfahrens zum Umschalten nach Anspruch 1 durchzuführen.

14. Datenträger, der von einem Computer eines Wi-Fi-Zugangspunkts gelesen werden kann und Anweisungen eines Computerprogramms (110) nach Anspruch 13 enthält.

## Claims

1. Method for switching a connection of a mobile Wi-Fi station (STA1) from a first access point (AP1) of a plurality of Wi-Fi access points to a second access point (AP2) of the plurality of Wi-Fi access points, the method comprising:

   • establishment of a logic link between the station and a carrier (U1) of the station, on the basis of a comparison between a first position of the carrier and at least one value in relation to a signal transmitted by the station;
   • a switching decision (E5) on the basis of a second position of the carrier,

   wherein the first position and the second position of the carrier are determined by at least one access point of the plurality of Wi-Fi access points, on the basis of a signal reflected by the carrier, called Wi-Fi radar signal.

2. Method according to Claim 1, wherein the Wi-Fi radar signal is a beacon signal.

3. Method according to either of the preceding claims, wherein the at least one value in relation to a signal transmitted by the station is translated into a distance of the station from an access point that transmitted the signal received by the station, in accordance with a predetermined correspondence table.

4. Method according to one of the preceding claims, comprising at least one update to the logic link after the establishment, on the basis of a comparison between a new position of the carrier and at least one new value in relation to a signal transmitted by the station.

5. Method according to Claim 4, comprising storing the logic link before the update.

6. Method according to one of the preceding claims, wherein the logic link is established using at least two values in relation to a signal transmitted by the station, measured by at least two access points of the plurality of Wi-Fi access points.

7. Method according to one of the preceding claims, wherein the at least one value in relation to a signal transmitted by the station is the value of an RSSI parameter.

8. Method according to one of the preceding claims, wherein the switching decision is also made on the basis of a value of an RSSI parameter.

9. Method according to one of the preceding claims, wherein the logic link is established on the basis of multiple values in relation to a signal transmitted by the station, received respectively by multiple access points.

10. Device (100) for switching a connection of a mobile Wi-Fi station (STA1) from a first access point (AP1) of a plurality of Wi-Fi access points to a second access point (AP2) of the plurality of Wi-Fi access points, the device comprising a receiver (101), a transmitter (102), a processor (130) and a memory (120) coupled to the processor with instructions intended to be executed by the processor in order to:

> • establish a logic link between the station and a carrier of the station (U1), on the basis of a comparison between a first position of the carrier and at least one value in relation to a signal transmitted by the station;
> • decide whether to switch on the basis of a second position of the carrier,

the first position and the second position of the carrier being determined by at least one access point of the plurality of Wi-Fi access points, on the basis of a signal reflected by the carrier, called Wi-Fi radar signal.

11. Wi-Fi access point comprising a device according to Claim 10.

12. Wi-Fi network comprising a plurality of geolocated access points and a controller able to control the plurality of geolocated access points, the controller comprising a device according to Claim 10.

13. Computer program (110) comprising instructions that, when these instructions are executed by a processor, prompt said processor to implement the steps of the switching method according to Claim 1.

14. Information medium able to be read by a computer of a Wi-Fi access point and comprising instructions of a computer program (110) according to Claim 13.

EP 4 297 485 B1

[Fig 1a]

14

[Fig 1b]

U1 STA1

AP1

U2 STA2

AP2

U3

L

T0+10

[Fig 1c]

[Fig 1d]

U2

AP1

STA2

U1

STA1

AP2

U3

L

T0+20

[Fig 1e]

AP1

U2

STA2

U1

STA1

AP2

L

U3

T0+30

[Fig 2]

[Fig 3]

## RÉFÉRENCES CITÉES DANS LA DESCRIPTION

**Documents brevets cités dans la description**

- US 2010069070 A

- CN 106792954 A

**Littérature non-brevet citée dans la description**

- **FADEL ADIB et al.** Multi-Person Localization via RF Body Reflections. *NSDI'15: Proceedings of the 12th USENIX Conference on Networked Systems Design and Implementation*, May 2015